# EUROPÄISCHE PATENTSCHRIFT

(11) **EP 1 320 700 B1**
(45) Veröffentlichungstag und Bekanntmachung des Hinweises auf die Patenterteilung: **25.05.2005**
(21) Anmeldenummer: 01985286.2
(22) Anmeldetag: 25.09.2001
(51) Int. Cl.: F16J 15/32

(54) **DICHTMANSCHETTE**
SEALING COLLAR
GARNITURE D'ETANCHEITE

(30) Priorität: 25.09.2000 DE 10047701
(43) Veröffentlichungstag der Anmeldung: 25.06.2003
(73) Patentinhaber: Carl Freudenberg KG, 69469 Weinheim (DE)
(72) Erfinder: FONTAINE, Jean-Paul, 52200 Langres (FR); KJAER, Arne, 3400 Hilleroed (DK)
(86) Internationale Anmeldenummer: PCT/EP2001/011044
(87) Internationale Veröffentlichungsnummer: WO 2002/025144

(56) Entgegenhaltungen:
- DE-A1- 3 309 538
- US-A- 3 275 332

## Beschreibung

Die Erfindung betrifft eine Dichtmanschette aus zumindest einem PTFE-Compound.

### Stand der Technik

Dichtringe mit Dichtmanschette aus PTFE-Compound sind allgemein bekannt, beispielsweise aus der DE 33 09 538 C2.

Die Dichtmanschetten aus einem PTFE-Compound gemäß Stand der Technik sind weiß. Dabei ist von Nachteil, dass eine Sichtprüfung auf Fehler der Dichtmanschette, beispielsweise im Bereich der Dichtkante, erschwert ist, da die hell-weiße Oberfläche Licht unregelmäßig reflektiert und die weiße Oberfläche grell helle Punkte aufweist.

Auch eine von Prüfpersonen unabhängige automatische Kontrolle der Dichtmanschetten mittels einer Videokamera und elektronischem Bildvergleich (fotoelektronische Kontrolle) ist wegen der unregelmäßigen Lichtreflexion auf der Oberfläche der Dichtmanschette nur mit Einschränkung möglich.

Außerdem ist von Nachteil, dass die Montage mehrerer gleichfarbig weißer, ähnlich aussehender aber in der Funktion unterschiedlicher Dichtmanschetten in einer Maschine zu Montagefehlern durch Verwechslung der Dichtmanschetten führen kann.

Aus der US 3,275,332 ist ein Dichtring bekannt, mit einem Stützring, der in das Gehäuse eines Maschinenelements eingepresst ist. Der dem Maschinenelement zugewandte Außenumfang des Stützrings ist mit einer Beschichtung versehen, die beispielsweise aus Polyethylen besteht, wobei innerhalb der Beschichtung Pigmente angeordnet sind.

### Darstellung der Erfindung

Der Erfindung liegt die Aufgabe zugrunde, eine Dichtmanschette der eingangs genannten Art derart weiterzuentwickeln, dass die Sichtprüfung einer Dichtmanschette aus glasfasergefülltem PTFE-Werkstoff mit dem menschlichen Auge oder auf fotoelektronischem Wege vereinfacht wird und/oder dass Montagefehler vermieden werden.

Diese Aufgabe wird erfindungsgemäß mit den Merkmalen von Anspruch 1 gelöst Auf vorteilhafte Ausgestaltungen nehmen die Unteransprüche Bezug.

Zur Lösung der Aufgabe ist eine Dichtmanschette aus zumindest einem PTFE-Compound vorgesehen, wobei der Compound einen PTFE-verträglichen Farbstoff umfaßt und Glasfasern enthält, die von Farbpigmenten ummantelt sind. Die gebrauchsfertige Dichtmanschette weist dann eine von weiß abweichende Farbe auf, wobei die eingefärbte PTFE-Dichtmanschette durch eine Sichtprüfung besser zu überprüfen ist, als weiße PTFE-Dichtmanschetten, da die eingefärbte PTFE-Dichtmanschette das auf ihre Oberfläche auftreffende Licht gleichmäßig reflektiert und unterschiedlich helle Lichtreflexe vermieden werden. Der Farbstoff kann durch Farbpigmente zumindest einer Farbe gebildet sein.

Eine besonders einfache Sichtprüfung durch das menschliche Auge oder auf fotoelektronischem Wege durch eine Videokamera, kann dadurch erfolgen, dass die Farbpigmente eine mattfarbene Oberfläche aufweisen. Durch die matte Oberfläche der Farbpigmente wird das auf die Dichtmanschette auftreffende Licht sehr gleichmäßig reflektiert, so dass z.B. die Dichtlippe einer PTFE-Dichtmanschette, die einen Rückförderdrall aufweist, bereits durch bloße Überprüfung mit dem menschlichen Auge und gegebenenfalls einer Lupe möglich ist. Im Hinblick auf eine einfache, kostengünstige Sichtprüfung sind PTFE-Dichtmanschetten mit einer matten, farbigen Oberfläche von hervorzuhebendem Vorteil. Auch von Prüfpersonen unabhängige automatische Kontrollen mit Videokamera und elektronischem Bildvergleich ist problemlos möglich. Der Bildvergleich erfolgt dadurch, dass in einem Kennfeld abgelegte Sollwerte mit den von der Videokamera erfassten Istwerten verglichen werden. Soll-/Istwert-Parameter, die miteinander verglichen werden können, können beispielsweise durch Abmessungen und/oder Rückförderdrallnuten, fehlerhafter Vertiefungen oder Erhöhungen auf der Dichtmanschette und/oder Verschmutzungen der Oberfläche gebildet sein.

Dichtmanschetten aus reinem, weißem PTFE eignen sich nur in begrenztem Maße für gebrauchsfertige Produkte, da sich der Werkstoff ab einer gewissen Belastung gleichbleibend durch Kriechen bzw. Kaltfluss deformiert. Die Abriebfestigkeit eines solchen Werkstoffs ist vergleichsweise gering und/oder der reine, weiße PTFE-Werkstoff weist eine große Wärmedehnung bei geringer Wärmeleitfähigkeit auf. Um PTFE für viele Anwendungsfälle nutzbar zu machen, besteht die Möglichkeit, Füllstoff zu verwenden, wie beispielsweise Graphit, wobei Graphit innerhalb des PTFE-Compounds eine gute Abriebfestigkeit und ein hohes Wärmeleitvermögen bewirkt.

Als Füllstoffe gelangen Glasfasern zur Anwendung. Glasfäsergefüllte PTFE-Werkstoffe gelangen für höher druckbelastete Flachdichtungen zur Anwendung, ebenso wie für Kolbenringe, Lager oder chemisch beständige Ventilsitze. Mit Bronze gefüllte PTFE-Werkstoffe sind Werkstoffe mit höchster Druck- und Verschleißfestigkeit für Lager, Kolbenringe und Führungen im allgemeine Maschinenbau.

Für Dichtmanschetten hat es sich für die Funktion als vorteilhaft bewährt, wenn der Compound Glasfasern enthält. Die Glasfasern verstärken üblicherweise störende ungleichmäßige Reflexionen auf den Oberflächen der Dichtmanschetten.

Um die ungleichmäßigen Reflexionen zu vermeiden, sind die Glasfasern erfindungsgemäß von Farbpigmenten ummantelt. Störende Lichtreflexe bei der Sichtprüfung der Dichtmanschetten sind dadurch ausgeschlossen.

Die Dichtmanschette kann einen Anbindebereich an einem Stützkörper aufweisen und einen Dichtbereich, der ein abzudichtendes Maschinenelement dichtend berührt, wobei der Anbindebereich und der Dichtbereich durch voneinander abweichend eingefärbte PTFE-Compounds gebildet sein können. In der eingangs genannten DE 33 09 538 C2 ist ein Dichtring offenbart, der einen Anbindebereich und einen Dichtbereich aufweist. Weisen der Anbindebereich und der Dichtbereich unterschiedliche Farben auf, die dadurch bewirkt werden, dass der Anbindebereich und der Dichtbereich durch voneinander abweichend eingefärbte PTFE-Compounds gebildet sind, ist die korrekte Montage des Dichtrings wesentlich vereinfacht. Durch die Zweifarbigkeit läßt sich problemlos erkennen, ob der Anbindebereich eine ausreichend große radiale Erstreckung aufweist, mit der er am Stützkörper festgelegt ist.

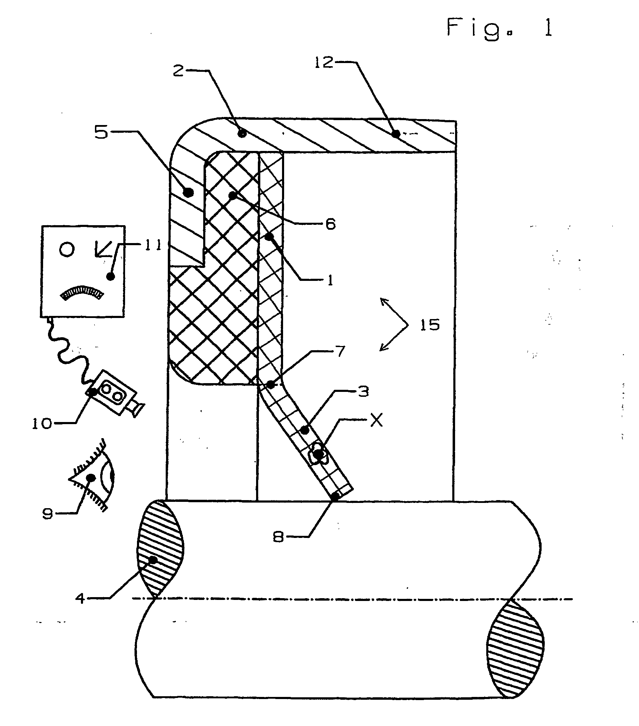

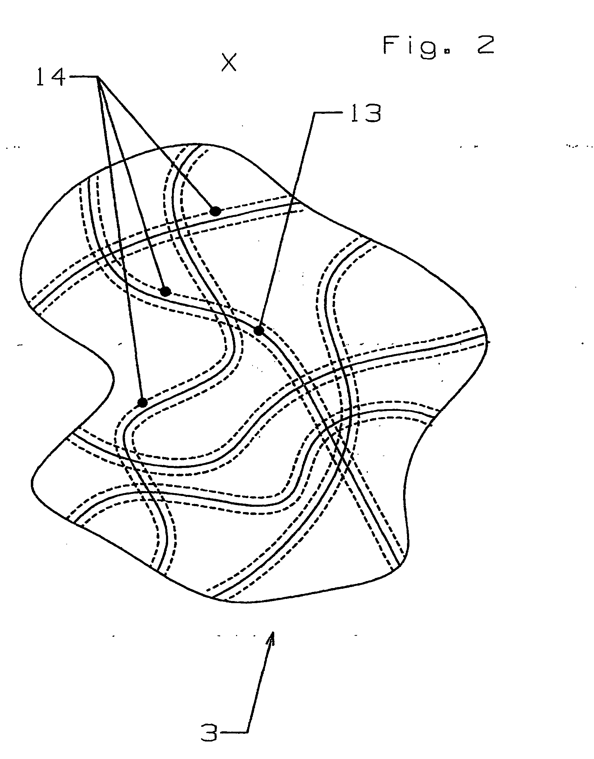

Ein Ausführungsbeispiel eines erfindungsgemäßen Dichtrings mit Dichtmanschette wird nachfolgend anhand der Figuren 1 und 2 näher erläutert. Diese zeigen jeweils in schematischer Darstellung:

### Kurzbeschreibung der Zeichnungen

- Fig. 1: Ein Ausführungsbeispiel eines Dichtrings mit Dichtmanschette,
- Fig. 2: einen Ausschnitt aus der Dichtmanschette des Dichtrings aus Fig. 1 in stark vergrößerter Darstellung.

### Ausführung der Erfindung

In Fig. 1 ist ein Dichtring mit Dichtmanschette 15 gezeigt, umfassend einen Stützkörper 2, der aus einem metallischen Werkstoff besteht und winkelförmig ausgebildet ist. Der Stützkörper ist im Bereich seines Radialflansch 5 auf der dem Anbindebereich 1 zugewandten Seite mit einer Zwischenschicht 6 aus Gummi überdeckt, wobei der Anbindebereich 1 und die Zwischenschicht 6 durch eine geeignete adhäsive Verbindung miteinander verbunden sind. Der Anbindebereich 1 geht in den Dichtbereich 3 über, wobei der Dichtbereich 3 keine Verbindung mehr zur Zwischenschicht 6 hat. In diesem Ausführungsbeispiel ist der Dichtbereich 3 blau, der Anbindebereich demgegenüber rot, wobei die Grenze zwischen den beiden Farben in diesem Ausführungsbeispiel mit der Bezugsziffer 7 bezeichnet ist. Der Dichtbereich 3 weist in diesem Ausführungsbeispiel eine Dichtlippe 8 auf, die das abzudichtende Maschinenelement 4, das in diesem Ausführungsbeispiel durch eine Welle gebildet ist, umfangsseitig dichtend umschließt. Dadurch, dass der Anbindebereich 1 und der Dichtbereich 3 unterschiedliche, jeweils von weiß abweichende Farben aufweisen, wobei die verwendeten Farbpigmente 14 eine matte Oberfläche aufweisen, ist die Sichtprüfung durch das menschliche Auge 9 und/oder auf fotoelektronischem Wege mittels einer Videokamera 10 einfach und problemlos möglich. Die Videokamera 10 zum elektronischen Bildvergleich ist an eine Auswertevorrichtung 11 angeschlossen.

Durch den zweifarbig ausgebildeten Dichtring ist die korrekte Montage des Anbindebereich 1 an die Zwischenschicht 6 einfach zu überprüfen. Würde beispielsweise auf der dem Maschinenelement 4 zugewandten Seite der Zwischenschicht 6 über dem blauen Dichtbereich 3 ein roter Streifen des Anbindebereichs 1 erscheinen, wäre sofort klar, dass der Anbindebereich 1 an der Zwischenschicht 6 radial zu kurz ist und/oder der Anbindebereich 1 den Axialflansch 12 des Stützkörpers 2 auf seiner Innenseite nicht anliegend berührt. Durch die matt-farbige Oberfläche der Dichtlippe 8 können beispielsweise Profilierungen, die die Dichtlippe 8 aufweist, beispielsweise ein Rückförderdrall, durch eine Sichtprüfung überprüft werden. Allein für eine solche Sichtprüfung wäre es ausreichend, wenn der Anbindebereich 1 und der Dichtbereich 3 zwar gleichfarbig wären, ihre jeweilige Oberfläche jedoch eine matte, von weiß abweichende Farbe aufweisen würden.

In Fig. 2 ist der Ausschnitt x aus Fig. 1 stark vergrößert gezeigt. Das dargestellte PTFE-Compound umfaßt Glasfasern 13, die von blauen Farbpigmenten mit matt schimmemder Oberfläche ummantelt sind. Der gesamte Dichtbereich 3 erscheint dadurch in einem gleichmäßigen matt-blau.

## Patentansprüche

1. Dichtmanschette aus zumindest einem PTFE-Compound, wobei der Compound einen PTFE-verträglichen Farbstoff umfasst und Glasfasern enthält, die von Farbpigmenten ummantelt sind.

2. Dichtmanschette nach Anspruch 1, **dadurch gekennzeichnet, dass** der Farbstoff durch Farbpigmente zumindest einer Farbe gebildet ist.

3. Dichtmanschette nach Anspruch 2, **dadurch gekennzeichnet, dass** die Farbpigmente eine matte Oberfläche aufweisen.

4. Dichtmanschette nach einem der Ansprüche 1 bis 3, mit einem Anbindebereich (1) an einen Stützkörper (2) und einen Dichtbereich (3), der ein abzudichtendes Maschinenelement (4) dichtend berührt, **dadurch gekennzeichnet, dass** der Anbindebereich (1) und der Dichtbereich (3) durch voneinander abweichend eingefärbte PTFE-Compounds gebildet sind.

## Claims

1. A sealing collar composed of at least one PTFE compound, the compound comprising a PTFE-compatible colorant and containing glass fibres which are encased by colouring pigments.

2. A sealing collar according to claim 1, **characterized in that** the colorant is formed by colouring pigments of at least one colour.

3. A sealing collar according to claim 2, **characterized in that** the colouring pigments have a matt surface.

4. A sealing collar according to any one of claims 1 to 3, with a tie-up region (1) to a supporting body (2) and to a sealing region (3) which sealingly touches a machine element (4) to be sealed off, **characterized in that** the tie-up region (1) and the sealing region (3) are formed by PTFE compounds coloured differently from one another.

## Revendications

1. Manchon d'étanchéité en au moins un matériau composite au PTFE, le matériau composite comprenant un colorant compatible avec le PTFE et contenant des fibres de verre enrobées de pigments colorés.

2. Manchon d'étanchéité selon la revendication 1, **caractérisé par le fait que** le colorant est formé de pigments colorés d'au moins une couleur.

3. Manchon d'étanchéité selon la revendication 2, **caractérisé par le fait que** les pigments colorés présentent une surface mate.

4. Manchon d'étanchéité selon l'une des revendications 1 à 3, avec une zone de raccordement (1) sur un corps support (2) et une zone d'étanchéité (3) qui est en contact étanche avec un élément de machine (4) à rendre étanche, **caractérisé par le fait que** la zone de raccordement (1) et la zone d'étanchéité (3) sont formées de matériaux composites au PTFE colorés de manière différente.
